# EUROPÄISCHE PATENTSCHRIFT

(11) **EP 2 594 455 B1**
(45) Veröffentlichungstag und Bekanntmachung des Hinweises auf die Patenterteilung: **09.11.2016**
(21) Anmeldenummer: 12185600.9
(22) Anmeldetag: 24.09.2012
(51) Int. Cl.: B62D 5/00, B60D 1/36, B60D 1/38, B60D 1/62

(54) **Vorrichtung und Verfahren zum Verbessern des Ankuppelvorgangs eines Fahrzeugs mit einer Anhängerkupplung**
Apparatus and method for improving the process of coupling a vehicle with a trailer coupling
Dispositif et procédé d'amélioration du procédé de couplage d'un véhicule automobile avec un attelage

(30) Priorität: 15.11.2011 DE 102011086391
(43) Veröffentlichungstag der Anmeldung: 22.05.2013
(73) Patentinhaber: ROBERT BOSCH GMBH, 70442 Stuttgart (DE)
(72) Erfinder: Schneider, Marcus, 71642 Ludwigsburg (DE); Niemz, Volker, 71277 Rutesheim (DE)

(56) Entgegenhaltungen:
- EP-A2- 1 249 379
- DE-A1- 4 303 815
- DE-A1- 4 413 694
- DE-A1- 10 247 975
- DE-A1- 10 336 985
- DE-A1- 19 526 702
- JP-A- 2004 210 198
- US-A1- 2005 281 436
- US-A1- 2010 096 203

## Beschreibung

Die vorliegende Erfindung betrifft ein Verfahren zum Unterstützen eines Fahrers eines Fahrzeugs bei der Durchführung einer Rückwärtsfahrt des Fahrzeugs sowie ein Rückfahrassistenzsystem für ein Fahrzeug zur Unterstützung eines Fahrers des Fahrzeugs bei der Durchführung einer Rückwärtsfahrt.

### STAND DER TECHNIK

Dem Fahrer eines Kraftfahrzeugs werden in der modernen Kraftfahrzeugtechnik verschiedenste Unterstützungssysteme zur Seite gestellt. So sind vielfältige Sensorsysteme, wie zum Beispiel Ultraschall-, Radar- und/oder Videosensorsysteme, bekannt, mit denen die Umgebung eines Fahrzeugs überwacht werden können. Dadurch ist es beispielsweise möglich, die relative Position von Objekten, die das Fahrzeug umgeben, zum Fahrzeug zu bestimmen. Ferner sind so genannte Überlagerungslenkungen bekannt, die eine dynamische Adaption der Übersetzung zwischen einem Lenkradwinkel und einem Lenkeinschlag des Fahrzeugs erlauben. Dieses wird zum Beispiel zur Verbesserung der Fahrdynamikeigenschaften bei hohen Geschwindigkeiten oder zur Erhöhung der Wendigkeit eines Fahrzeugs eingesetzt. Dabei kann zum Beispiel bei hohen Geschwindigkeiten das Übersetzungsverhältnis vergrößert werden um eine größere Stabilität der Lenkung gegen versehentliche Lenkbewegungen des Fahrers zu erreichen und bei geringen Geschwindigkeiten, zum Beispiel bei Parkmanövern, das Übersetzungsverhältnis verkleinert werden, um mit geringeren Lenkradeinschlägen einen hohen Lenkeinschlag zu erreichen und so in eine Parklücke besser und insbesondere leichter einparken zu können.

Als problematisch hat sich herausgestellt, wenn bei einer Rückwärtsfahrt des Fahrzeugs eine bestimmte Position des Fahrzeugs bzw. ein bestimmtes Ziel mit dem Fahrzeug erreicht werden soll. In einem derartigen Fall, wie es zum Beispiel bei einem Rückwärtseinparkvorgang in einer Längsparklücke und insbesondere bei einem Ankuppelvorgang, bei dem beispielsweise eine Anhängerdeichsel mit einer Anhängerkupplung des Fahrzeugs verbunden werden soll, ist eine hohe Präzision der Fahrbewegung nötig. Da bei einem Ankuppelvorgang insbesondere die Deichsel des Anhängers mit der Anhängerkupplung des Fahrzeugs in Kontakt gebracht werden soll, können hier Fehler in der Position des Fahrzeugs relativ zur Deichsel zu einem Verfehlen der Anhängerkupplung und darüber hinaus zu einer Beschädigung des Fahrzeugs führen.

Um diese Gefahr zu minimieren, können dem Fahrer des Fahrzeugs Assistenzsysteme zur Seite gestellt werden. In der Druckschrift DE 43 03 815 A1 ist dafür zum Beispiel eine Ankuppelhilfseinrichtung für Kraftfahrzeuge beschrieben. Dabei werden sowohl am Kraftfahrzeug als auch an einer Deichsel eines Anhängers Ultraschallsensoren angebracht, welche als Sende- und Empfangseinheiten ausgebildet sind. Die Lage der Deichsel relativ zum Kraftfahrzeug kann somit bestimmt werden. Der Fahrer eines Kraftfahrzeugs mit einer derartigen Ankuppelhilfseinrichtung kann auf diese zusätzliche Information bei der Rückwärtsfahrt zum Ankuppeln des Anhängers zurückgreifen. Die Rückfahrt selbst wird dabei allein durch den Fahrer des Fahrzeugs gesteuert.

Aus der Druckschrift DE 44 13 694 A1 ist eine Hilfsvorrichtung für ein heckgesteuertes Fahrzeug zur sicheren Ankupplung eines Anhängers an ein heckseitiges Kupplungsmaul bekannt. Dabei wird durch die Hilfsvorrichtung die Lage eines Zugarmes des Anhängers relativ zum Fahrzeug ermittelt und die Lenkung des heckgesteuerten Fahrzeugs direkt angesteuert oder dem Fahrer des Fahrzeugs die nötigen Lenkbewegungen angezeigt. Der Fahrer des Fahrzeugs ist somit, im Fall dass er die Lenkung weiterhin vornimmt, in seiner Aufmerksamkeit sehr auf die Anzeige der Hilfsvorrichtung konzentriert. Mögliche Gefahrmomente, die bei einer Rückwärtsfahrt entstehen können, können so vom Fahrer übersehen werden. Dadurch kann eine Gefährdung für das Fahrzeug und/oder für Objekte und Personen in der Umgebung des Fahrzeugs entstehen.

Aus der DE 103 36 985 A1 ist ein Verfahren zur Unterstützung des Fahrers eines Fahrzeugs bei einem Fahrmanöver, wie z. B. Park- oder Rangiermanöver bekannt. Dabei wird eine Referenztrajektorie bestimmt, entlang der das Fahrzeug bewegt werden soll. Dem Fahrer wird während des Fahrmanövers eine einzustellende, das Fahrzeug entlang der Referenztrajektorie steuernde Lenkradstellung angegeben. Eine Lenkwinkelabweichung zwischen dem vom Fahrer tatsächlich eingestellten Ist-Lenkwinkel und dem der angeforderten Lenkradstellung entsprechenden Soll-Lenkwinkel wird vom Fahrer unabhängig korrigiert. Das Dokument DE 103 36 985 A1 ist als nächstliegender Stand der Technik nach dem Oberbegriff des Anspruchs 1 zu sehen..

### OFFENBARUNG DER ERFINDUNG

Es ist daher Aufgabe der Erfindung, die voranstehend beschriebenen Nachteile bekannter Rückfahrassistenzsysteme von Fahrzeugen zumindest teilweise zu beheben. Insbesondere ist es Aufgabe der vorliegenden Erfindung, ein Verfahren zum Unterstützen des Fahrers eines Fahrzeugs bei der Durchführung einer Rückwärtsfahrt des Fahrzeugs sowie ein Rückfahrassistenzsystem für ein Fahrzeug zur Unterstützung eines Fahrers des Fahrzeugs bei der Durchführung einer Rückwärtsfahrt des Fahrzeugs bereitzustellen, welche in einfacher und kostengünstiger Weise den Fahrer des Fahrzeugs bei der Rückwärtsfahrt des Fahrzeugs unterstützen, ohne ihm die Zuständigkeit über die Lenkung des Fahrzeugs gänzlich abzunehmen und ohne seine Konzentration zu sehr zu beanspruchen.

Voranstehende Aufgabe wird gelöst durch ein Verfahren mit den Merkmalen des unabhängigen Anspruchs 1 sowie durch ein Rückfahrassistenzsystem mit den Merkmalen des unabhängigen Anspruchs 7. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Rückfahrassistenzsystem und jeweils umgekehrt, so dass bezüglich der Offenbarung zu den einzelnen Erfindungsaspekten stets wechselseitig Bezug genommen wird bzw. werden kann.

In einem ersten Aspekt der Erfindung wird die Aufgabe durch ein Verfahren zum Unterstützen eines Fahrers eines Fahrzeugs mit wenigstens einer Sensoranordnung zur Überwachung einer Umgebung um das Fahrzeug und eine Überlagerungslenkung zur Ansteuerung einer Lenkung des Fahrzeugs bei der Durchführung einer Rückwärtsfahrt des Fahrzeugs gelöst. Insbesondere wird das Verfahren dabei durch folgende Verfahrensschritte gekennzeichnet:
a) Überwachung der rückwärtigen Umgebung des Fahrzeugs,
b) Festlegen eines Ziels in der rückwärtigen Umgebung,
c) Ermitteln der Position des Ziels relativ zum Fahrzeug,
d) Berechnen eines Soll-Lenkeinschlages des Fahrzeugs zum Erreichen des Ziels bei der Rückwärtsfahrt,
e) Ermitteln des vom Fahrer vorgegebenen Lenkradwinkels,
f) Anpassen eines Übersetzungsverhältnisses der Überlagerungslenkung zwischen Lenkradwinkel und Lenkeinschlag des Fahrzeugs zur Angleichung des Lenkeinschlages an den Soll-Lenkeinschlag.

Als Sensoranordnungen können dabei im Sinne der Erfindung insbesondere Ultraschall-, Radar- und/oder Kamerasysteme mit einer oder mehreren Kameras vorgesehen sein. Selbstverständlich sind auch Kombinationen der genannten Sensorsysteme und/oder Sensorsysteme basierend auf anderen Techniken möglich. Eine Überlagerungslenkung erlaubt die dynamische Adaption des Übersetzungsverhältnisses zwischen Lenkradwinkel und Lenkeinschlag. Dabei wird zum Beispiel bei einer Fahrt bei hoher Geschwindigkeit das Übersetzungsverhältnis vergrößert, um die Fahrt des Fahrzeugs stabiler gegen versehentliche Lenkbewegungen des Fahrers auszugestalten. Beim Rangieren eines Fahrzeugs, welches insbesondere bei niedrigen Geschwindigkeiten vorgenommen wird, kann ein niedrigeres Übersetzungsverhältnis zu einer höheren Wendigkeit des Fahrzeugs führen. Dies ist insbesondere dann wichtig, wenn zum Beispiel in engen Parklücken eingeparkt werden soll.

Eine enge Parklücke kann dabei zum Beispiel auch ein Ziel im Sinne der Erfindung darstellen. Vorzugsweise kann jedoch ein Ziel im Sinne der Erfindung eine Deichsel eines Anhängers sein. Hier ist es insbesondere wichtig, das Fahrzeug bzw. die Anhängervorrichtung des Fahrzeugs, nahe und wohl positioniert an die Deichsel heranzuführen, um einen Ankuppelvorgang ausführen zu können. Dies wird durch das Verfahren insbesondere derart gelöst, dass die rückwärtige Umgebung des Fahrzeugs überwacht wird. Dabei können Objekte, die sich in der rückwärtigen Umgebung des Fahrzeugs befinden, detektiert werden. Aus diesen Objekten oder ein Teil eines dieser Objekte, insbesondere beispielsweise eine Spitze einer Deichsel eines Anhängers, wird daraufhin als Ziel in der rückwärtigen Umgebung gewählt. Durch Auswahl des Ziels als eines der in der rückwärtigen Umgebung des Fahrzeugs detektierten Objekte wird sichergestellt, dass im nächsten Schritt des Verfahrens die Position des Zieles relativ zum Fahrzeug ermittelt werden kann. Hierbei kann es sich beispielsweise um die relative Position der Spitze einer Deichsel eines Anhängers zu einer Anhängerkupplung des Fahrzeugs handeln. Durch die Information über die Position des Zieles relativ zum Fahrzeug ist es möglich, einen Lenkeinschlag des Fahrzeugs zu errechnen, der zu einem Erreichen des Ziels bei einer Rückwärtsfahrt führt. Es handelt sich somit um einen Soll-Lenkeinschlag. Wird die Lenkung des Fahrzeugs mit diesem Soll-Lenkeinschlag eingeschlagen, kann bei einer Rückwärtsfahrt das Ziel erreicht werden. Der Fahrer des Fahrzeugs wird für die Rückwärtsfahrt ebenfalls die Lenkung verwenden und dafür das Lenkrad betätigen. Ein so vom Fahrer vorgegebene Lenkradwinkel wird ermittelt. Der vom Fahrer vorgegebene Lenkradwinkel kann jedoch oftmals bei einem vorgegebenen Übersetzungsverhältnis der Überlagerungslenkung einen Lenkeinschlag bedeuten, der mit dem SollLenkeinschlag nicht übereinstimmt. Eine erfolgreiche Rückwärtsfahrt, das heißt das Erreichen des Ziels in der rückwärtigen Umgebung, kann in diesem Fall nicht erreicht werden. Daher ist erfindungsgemäß vorgesehen, dass das Übersetzungsverhältnis der Überlagerungslenkung derart angepasst wird, dass der Lenkeinschlag, der durch das neue Übersetzungsverhältnis aus dem Lenkradwinkel resultiert, sich an den Soll-Lenkeinschlag angleicht. Die Rückwärtsfahrt kann somit erfolgreich abgeschlossen werden. Die Aufmerksamkeit des Fahrers wird dabei nicht unnötig abgelenkt. Somit kann der Fahrer weiterhin die Umgebung des Fahrzeugs im Auge behalten, wodurch die Sicherheit bei einer derartigen Rückwärtsfahrt erhöht wird. Ferner wird die Rückwärtsfahrt derart unterstützt, dass der Fahrer nur ungefähr in die Richtung des Ziels zu lenken braucht und trotzdem ein erfolgreicher Rückwärtsfahrtvorgang vorgenommen werden kann.

Des Weiteren kann es bei dem erfindungsgemäßen Verfahren vorgesehen sein, dass die Schritte c) bis f) des Verfahrens kontinuierlich und/oder quasikontinuierlich wiederholt werden. Durch eine kontinuierliche und/oder quasikontinuierliche Wiederholung der Verfahrensschritte c) bis f) wird ständig die Position des Ziels relativ zum Fahrzeug ermittelt. Durch die wiederholte Ausführung der Berechnung eines Soll-Lenkeinschlages, der Ermittlung des vom Fahrer vorgegebenen Lenkradwinkels und der Anpassung des Übersetzungsverhältnisses der Überlagerungslenkung kann auch beispielsweise in den Fällen eine erfolgreiche Rückwärtsfahrt gewährleistet werden, in denen die Rückwärtsfahrt mehrere Züge benötigt. Auch eine Bewegung des Ziels oder andere Abweichungen des Fahrzeugs von einer Bahn, die durch den Soll-Lenkeinschlag vorgegeben ist, sind denkbar. Quasikontinuierlich im Sinne der Erfindung bedeutet, dass zwischen der Ausführung der einzelnen Schritte diskrete zeitliche Abstände liegen. Diese diskreten zeitlichen Abstände sind insbesondere sehr klein, so dass sich eine Wiederholungsrate der Verfahrensschritte c) bis f) von mehreren pro Sekunde, insbesondere mehr als 10 pro Sekunde ergeben. Dadurch erscheint die Wiederholung für den Fahrer kontinuierlich. Für eine quasikontinuierliche Ausführung des Verfahrens ergeben sich somit die analogen Vorteile wie für eine kontinuierliche Ausführung des Verfahrens.

Ferner kann bei einem erfindungsgemäßen Verfahren vorgesehen sein, dass das Anpassen des Übersetzungsverhältnisses derart durchgeführt wird, dass das Übersetzungsverhältnis einen ersten Grenzwert nicht überschreitet und/oder einen zweiten Grenzwert nicht unterschreitet. Dieses ist insbesondere für derartige Situationen sinnvoll, in der unvorhergesehene Objekte in der rückwärtigen Umgebung des Fahrzeugs auftauchen und dort zu umfahrende Hindernisse darstellen. Durch einen ersten Grenzwert, den das Übersetzungsverhältnis nicht überschreitet, zum Beispiel ein Übersetzungsverhältnis von maximal 30 Grad Lenkradwinkel zu einem Grad Lenkeinschlag, ist der Fahrer zu jeden Zeitpunkt in der Lage, Ausweichmanöver auszuführen. Dies erhöht die Sicherheit einer derartigen Rückwärtsfahrt. Ferner kann es sinnvoll sein, dass das Übersetzungsverhältnis einen zweiten Grenzwert nicht unterschreitet. So kann es zum Beispiel sinnvoll sein, den zweiten Grenzwert derart zu setzen, dass der Lenkradwinkel und der Lenkeinschlag des Fahrzeugs rotationsgleich sind. Damit ist sichergestellt, dass zum Beispiel eine Lenkung nach rechts auch einen Lenkeinschlag nach rechts nach sich zieht. Eine Inversion des Lenkeinschlages kann somit vermieden werden.

In einer weiteren Ausgestaltungsform des erfindungsgemäßen Verfahrens kann vorgesehen sein, dass die rückwärtige Umgebung des Fahrzeugs zumindest schematisch und mit einer Abbildung des Lenkeinschlages und/oder des SollLenkeinschlages überlagert dem Fahrer sichtbar angezeigt wird. Neben einer schematischen Abbildung der rückwärtigen Umgebung des Fahrzeugs ist selbstverständlich zum Beispiel bei Einsatz eines Kamerasystems auch eine Abbildung des Videosignals des Kamerasystems denkbar. Die Anzeige liefert dabei eine Rückmeldung an den Fahrer. Durch die Überlagerung der Anzeige mit einer Abbildung des Lenkeinschlages und/oder des Soll-Lenkeinschlages wird der tatsächliche und/oder der nötige Fahrschlauch zum Erreichen des Ziels in der rückwärtigen Umgebung des Fahrzeugs eingeblendet. Bei einer Abbildung sowohl des Lenkeinschlages als auch des Soll-Lenkeinschlages können mögliche Abweichungen der beiden Lenkeinschläge gegeneinander sichtbar werden.

Ferner kann bei einem erfindungsgemäßen Verfahren vorgesehen sein, dass das Ziel automatisch und/oder durch den Fahrer des Fahrzeugs festgelegt wird. Bei einer automatischen Festlegung wird die Festlegung basierend auf den Daten der Sensoranordnung vorgenommen. So ist zum Beispiel bei Einsatz eines Kamerasystems mit mehreren Kameras als Sensoranordnungen ein Stereovideoverfahren zum Festlegen des Ziels denkbar. Bei einer Festlegung durch den Fahrer gibt der Fahrer durch geeignete Eingabeeinheiten das Ziel vor. Als Eingabeeinheiten sind hier zum Beispiel ein berührungsempfindlicher Bildschirm und/oder geeignete Schalter möglich. Denkbar ist auch, dass der Fahrer des Fahrzeugs nur einen Bereich, insbesondere einen rechteckigen Bereich, in der rückwärtigen Umgebung des Fahrzeugs, insbesondere auf einer Anzeige der rückwärtigen Umgebung des Fahrzeugs, auswählt und innerhalb des Bereiches das Ziel daraufhin automatisch festgelegt wird.

Bei einem erfindungsgemäßen Verfahren ist vorgesehen, dass vor Beginn der Rückwärtsfahrt des Fahrzeugs das Ziel mit einer Markierungseinrichtung markiert wird. Als Markierungseinrichtung sind hier insbesondere Farbmarkierungen, Transponder, Blinklichter und/oder eine Schallquelle denkbar. Die Markierung des Ziels mit einer Markierungseinrichtung erleichtert die Ermittlung der relativen Position des Ziels zum Fahrzeug. Die Position relativ zum Fahrzeug kann somit noch genauer bestimmt werden. Die Exaktheit der durchgeführten Rückwärtsfahrt wird somit erhöht.

Gemäß einem zweiten Aspekt der Erfindung wird die Aufgabe durch ein Rückfahrassistenzsystem für ein Fahrzeug zur Unterstützung eines Fahrers des Fahrzeugs bei der Durchführung einer Rückwärtsfahrt des Fahrzeugs mit wenigstens einer Sensoranordnung zur Überwachung einer Umgebung des Fahrzeugs und einer Überlagerungslenkung zur Ansteuerung einer Lenkung des Fahrzeugs, wobei durch die wenigstens eine Sensoranordnung eine rückwärtige Umgebung des Fahrzeugs überwachbar ist, gelöst. Insbesondere ist bei dem erfindungsgemäßen Rückfahrassistenzsystem vorgesehen, dass ein Ziel der rückwärtigen Umgebung festlegbar ist, dass das Rückfahrassistenzsystem einen Soll-Lenkeinschlag des Fahrzeugs zum Erreichen des Ziels bei der Rückwärtsfahrt berechnet, einen vom Fahrer vorgegebenen Lenkradwinkel ermittelt sowie durch eine Anpassung eines Übersetzungsverhältnisses der Überlagerungslenkung zwischen Lenkradwinkel und Lenkeinschlag des Fahrzeugs den Lenkeinschlag an den Soll-Lenkeinschlag angleicht.

Durch ein derartiges Rückfahrassistenzsystem ist es möglich, den Fahrer eines Fahrzeugs bei einer Rückwärtsfahrt des Fahrzeugs in einer Weise zu unterstützen, dass die Lenkbewegungen des Fahrers durch die Überlagerungslenkung an die eigentliche Lenkung des Fahrzeugs mit einem derart angepassten Übersetzungsverhältnis der Überlagerungslenkung weitergegeben werden, dass bei der Rückwärtsfahrt das Fahrzeug auf der durch den Soll-Lenkeinschlag vorgegebenen Fahrspur fährt. Der Fahrer des Fahrzeugs wird dadurch entlastet und muss nicht mehr seine ganze Aufmerksamkeit auf das Erreichen des Ziels in der rückwärtigen Umgebung des Fahrzeugs richten. Er kann somit mögliche Gefahrenquellen in der Umgebung frühzeitig erkennen und, wenn nötig, Maßnahmen ergreifen. Ein erfindungsgemäßen Rückfahrassistenzsystem erhöht somit zum Einen die Sicherheit einer Rückwärtsfahrt und zum Anderen den Komfort des Fahrers des Fahrzeugs.

In einem erfindungsgemäßen Rückfahrassistenzsystems ist vorgesehen, dass eine Anzeigeeinheit zur zumindest schematischen Anzeige der rückwärtigen Umgebung des Fahrzeugs vorgesehen ist, wobei der Anzeige eine Abbildung des Lenkeinschlages und/oder des Soll-Lenkeinschlages überlagert ist. Die Anzeige kann dabei insbesondere zum Beispiel auch bei Benutzung eines Kamerasystems als Sensoranordnung ein Videobild der rückwärtigen Umgebung darstellen. Die Anzeige dient dabei als Rückmeldung an den Fahrer, wobei insbesondere die Überlagerung der Abbildung mit dem Lenkeinschlag und/oder dem Soll-Lenkeinschlag dem Fahrer direkte Rückmeldung über die vorgenommene Rückwärtsfahrt liefert. Auch hat der Fahrer somit die Möglichkeit, seine Lenkbewegungen korrigierend zu verändern.

Bei dem erfindungsgemäßen Rückfahrassistenzsystem ist vorgesehen, dass der Anzeigeeinheit eine Eingabeeinheit derart zugeordnet ist, dass das Ziel anhand der Anzeige der Anzeigeeinheit durch den Fahrer und/oder unterstützt durch den Fahrer festlegbar ist. Als Eingabeeinheit ist hier insbesondere ein berührungsempfindlicher Bildschirm denkbar. Ferner können passende Schalter, die der Anzeigeeinheit zugeordnet sind, eine Eingabeeinheit darstellen. Der Fahrer wählt dabei das Ziel direkt an der Anzeigeeinheit über die Eingabeeinheit aus oder bestimmt einen Bereich, insbesondere einen rechteckigen Bereich, in dem dann durch das Rückfahrassistenzsystem das Ziel festgelegt wird. Selbstverständlich ist auch eine vollautomatische Festlegung des Ziels in der rückwärtigen Umgebung des Fahrzeugs durch das Rückfahrassistenzsystem denkbar.

In einer besonders bevorzugten Ausgestaltung eines erfindungsgemäßen Rückfahrassistenzsystems kann vorgesehen sein, dass das Rückfahrassistenzsystem zum Ausführen eines Verfahrens gemäß dem ersten Aspekt der Erfindung ausgestaltet ist. Sämtliche Vorteile, die zu einem Verfahren gemäß dem ersten Aspekt der Erfindung beschrieben worden sind, ergeben sich somit selbstverständlich auch für ein erfindungsgemäßes Rückfahrassistenzsystem, das zur Ausführung eines derartigen Verfahrens ausgestaltet ist.

### BEVORZUGTE AUSFÜHRUNGSBEISPIELE

Das erfindungsgemäße Verfahren und seine Weiterbildungen sowie deren Vorteile und das erfindungsgemäße Rückfahrassistenzsystem und seine Weiterbildungen sowie deren Vorteile werden nachfolgend anhand von zwei Zeichnungen näher erläutert. Es zeigen jeweils schematisch:
- Figur 1: ein Fahrzeug mit einem erfindungsgemäßen Rückfahrassistenzsystem bei einer Rückwärtsfahrt und
- Figur 2: eine Anzeigeeinheit eines erfindungsgemäßen Rückfahrassistenzsystems.

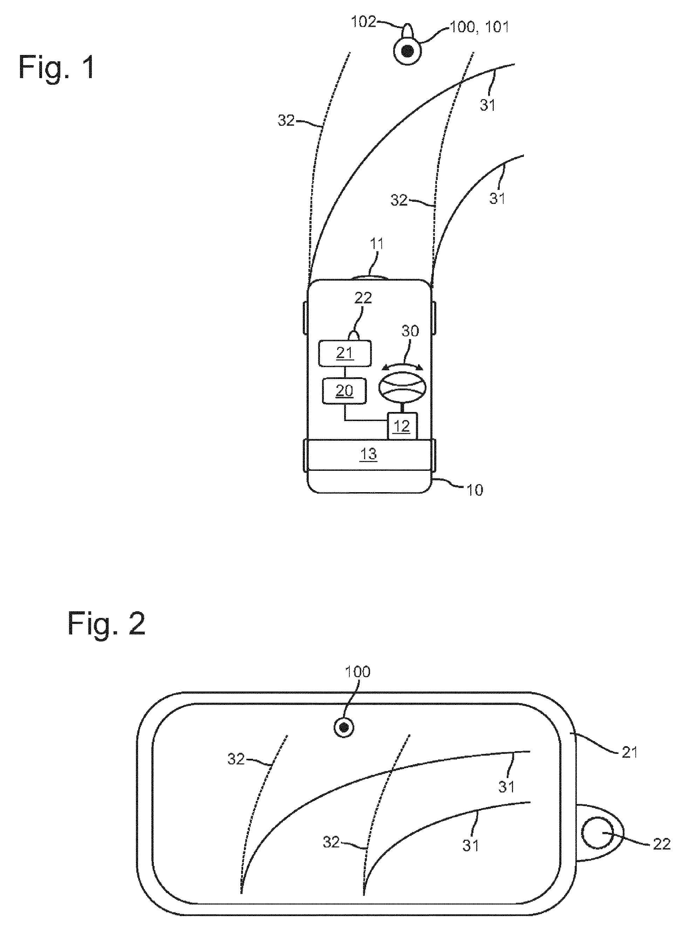

Elemente mit gleicher Funktion und Wirkungsweise sind in den Figuren 1 und 2 jeweils mit denselben Bezugszeichen versehen.

Fig. 1 zeigt ein Fahrzeug 10 mit einem erfindungsgemäßen Rückfahrassistenzsystem 20. In der rückwärtigen Umgebung des Fahrzeugs 10 befindet sich an einer Position 101 das Ziel 100 der Rückwärtsfahrt. Das Ziel 100 ist dabei mit einer Markierungseinrichtung 102 markiert. Die Markierungseinrichtung 102 kann dabei insbesondere als Farbmarkierung, Transponder, Blinklicht oder Schallquelle ausgestaltet sein. Die rückwärtige Umgebung des Fahrzeugs 10 wird durch eine Sensoranordnung 11 des Fahrzeugs 10 überwacht. Das Ziel 100, das insbesondere die Spitze einer Deichsel eines Anhängers sein kann, wird durch die Sensoranordnung 11 erfasst. Durch das Rückfahrassistenzsystem 20 wird basierend auf den Daten der Sensoranordnung 11 die relative Position 101 des Ziels 100 zum Fahrzeug 10 ermittelt. Auf einer Anzeigeeinheit 21 des Rückfahrassistenzsystems 20 wird die rückwärtige Umgebung des Fahrzeugs 10 inklusive des Ziels 100 angezeigt. Über die der Anzeigeeinheit 21 zugeordnete Eingabeeinheit 22 hat der Fahrer des Fahrzeugs 10 bereits das Ziel 100 ausgewählt. Die Eingabeeinheit 22 kann dabei insbesondere auch in die Anzeigeeinheit 21 integriert sein, zum Beispiel als berührungsempfindlicher Bildschirm. Zum Erreichen des Ziels 100 ist ein Soll-Lenkeinschlag 32 nötig, der hier gestrichelt als Fahrschlauch angedeutet ist. Der Fahrer des Fahrzeugs 10 stellt am Lenkrad des Fahrzeugs 10 einen Lenkradwinkel 30 ein. Dieser würde jedoch zu einem Lenkeinschlag 31 führen, der hier wiederum als Fahrschlauch angedeutet ist, mit dem ein Erreichen des Ziels 100 nicht möglich ist. Durch das erfindungsgemäße Rückfahrassistenzsystem 20 wird deshalb die Überlagerungslenkung 12 derart angesteuert, dass ein Übersetzungsverhältnis der Überlagerungslenkung 12 zwischen dem Lenkradwinkel 30 und dem Lenkeinschlag 31 verändert werden kann. Das Übersetzungsverhältnis wird dabei derart angepasst, dass der Lenkeinschlag 31, den die Lenkung 13 dann letztendlich einstellt, sich an den Soll-Lenkeinschlag 32 angleicht. Dadurch wird ein Erreichen des Ziels 100 in der rückwärtigen Umgebung des Fahrzeugs 10 erreicht, ohne die Aufmerksamkeit des Fahrers des Fahrzeugs 10 unnötig stark in Anspruch zu nehmen.

In der Fig. 2 ist eine Anzeigeeinheit 21 eines erfindungsgemäßen Rückfahrassistenzsystems 20 gezeigt. Der Anzeigeeinheit 21 ist dabei eine Eingabeeinheit 22 derart zugeordnet, dass der Fahrer des Fahrzeugs 10 ein Ziel 100 für die Rückwärtsfahrt festlegen kann. Die Anzeigeeinheit 21 bildet dabei die rückwärtige Umgebung des Fahrzeugs 10 zumindest schematisch ab. Sichtbar ist insbesondere das Ziel 100. Der Abbildung der rückwärtigen Umgebung des Fahrzeugs 10 sind ferner Fahrschläuche eingeblendet, die dem Lenkeinschlag 31 (durchgezogen) und dem Soll-Lenkeinschlag 32 (gestrichelt) entsprechen. Der Fahrer hat somit die Übersicht, ob die derzeitig eingeschlagene Lenkung, bzw. der von ihm eingestellte Lenkradwinkel 30, eine erfolgreiche Beendigung der Rückwärtsfahrt zulässt. Da durch das erfindungsgemäße Rückfahrassistenzsystem 20 die Übersetzung der Überlagerungslenkung 12 derart angepasst wird, dass sich der Lenkeinschlag 31 an den Soll-Lenkeinschlag 32 angleicht, wird der Fahrer jedoch deutlich entlastet. Durch das erfindungsgemäße Rückfahrassistenzsystem 20 wird somit die Konzentration des Fahrers nicht unnötig beansprucht. Der Fahrer kann auch weiterhin die Umgebung des Fahrzeugs beobachten, um mögliche Gefahrenquellen frühzeitig zu erkennen. Dies erhöht insbesondere die Sicherheit für das Fahrzeug 10 als auch für Objekte, insbesondere Personen, in der Umgebung des Fahrzeugs 10.

## Patentansprüche

1. Verfahren zum Unterstützen eines Fahrers eines Fahrzeugs (10) mit wenigstens einer Sensoranordnung (11) zur Überwachung einer Umgebung des Fahrzeugs (10) und eine Überlagerungslenkung (12) zur Ansteuerung einer Lenkung (13) des Fahrzeugs (10) bei der Durchführung einer Rückwärtsfahrt des Fahrzeugs (10), wobei das Verfahren folgende Verfahrensschritte vorsieht:
a) Überwachen der rückwärtigen Umgebung des Fahrzeugs (10),
b) Festlegen eines Ziels (100) in der rückwärtigen Umgebung,
c) Ermitteln der Position (101) des Ziels (100) relativ zum Fahrzeug (10),
d) Berechnen eines Solllenkeinschlags (32) des Fahrzeugs (10) zum Erreichen des Ziels (100) bei der Rückwärtsfahrt,
e) Ermitteln des vom Fahrer vorgegebenen Lenkradwinkels (30),
**gekennzeichnet durch** den folgenden Schritt:
f) Anpassen eines Übersetzungsverhältnisses der Überlagerungslenkung (12) zwischen Lenkradwinkel (30) und Lenkeinschlag (31) des Fahrzeugs (10) zur Angleichung des Lenkeinschlages (31) an den Sollenkeinschlag (32),wobei vor Beginn der Rückwärtsfahrt (10) des Fahrzeugs das Ziel (100) mit einer Markierungseinrichtung (102) markiert wird, wobei der Fahrer das Ziel (100) direkt an einer Anzeigeeinheit (21) über eine der Anzeigeeinheit (21) zugeordnete Eingabeeinheit (22) auswählt oder einen Bereich bestimmt, in dem das Ziel (100) festgelegt wird.

2. Verfahren nach Anspruch 1, **dadurch gekennzeichnet, dass** die Schritte c) bis f) des Verfahrens kontinuierlich und/oder quasikontinuierlich wiederholt werden.

3. Verfahren nach einem der Ansprüche 1 oder 2, **dadurch gekennzeichnet, dass** das Anpassen des Übersetzungsverhältnisses derart durchgeführt wird, dass das Übersetzungsverhältnis einen ersten Grenzwert nicht überschreitet und/oder einen zweiten Grenzwert nicht unterschreitet.

4. Verfahren nach einem der Ansprüche 1 bis 3, **dadurch gekennzeichnet, dass** die rückwärtige Umgebung des Fahrzeugs (10) zumindest schematisch und mit einer Abbildung des Lenkeinschlags (31) und/oder des Solllenkeinschlags (32) überlagert dem Fahrer sichtbar angezeigt wird.

5. Verfahren nach einem der Ansprüche 1 bis 4, **dadurch gekennzeichnet, dass** das Ziel (100) automatisch und/oder durch den Fahrer des Fahrzeugs (10) festgelegt wird.

6. Rückfahrassistenzsystem (20) für ein Fahrzeug (10) zur Unterstützung eines Fahrers des Fahrzeugs (10) bei der Durchführung einer Rückwärtsfahrt des Fahrzeugs (10) mit wenigstens einer Sensoranordnung (11) zur Überwachung einer Umgebung des Fahrzeugs (10) und einer Überlagerungslenkung (12) zur Ansteuerung einer Lenkung (13) des Fahrzeugs (10), wobei durch die wenigstens eine Sensoranordnung (11) eine rückwärtigen Umgebung des Fahrzeugs (10) überwachbar ist, wobei ein Ziel (100) in der rückwärtigen Umgebung festlegbar ist, und wobei das Rückfahrassistenzsystem (20) einen Solllenkeinschlag (32) des Fahrzeugs (10) zum Erreichen des Ziels (100) bei der Rückwärtsfahrt berechnet, einen vom Fahrer vorgegebenen Lenkradwinkel (30) ermittelt , **gekennzeichnet dadurch, dass** das Rückfahrassistenzsystem durch eine Anpassung eines Übersetzungsverhältnisses der Überlagerungslenkung (12) zwischen Lenkradwinkel (30) und Lenkeinschlag (31) des Fahrzeugs (10) den Lenkeinschlages (31) an den Sollenkeinschlag (32) angleicht, und mit einer Anzeigeeinheit (21), die zur zumindest schematischen Anzeige der rückwärtigen Umgebung des Fahrzeugs (10) vorgesehen ist, wobei der Anzeige (21) eine Abbildung des Lenkeinschlags (31) und/oder des Solllenkeinschlags (32) überlagert ist und wobei das Ziel mit einer Markierungseinrichtung (102) markiert ist, die eine Ermittlung der relativen Position des Ziels zum Fahrzeug erleichtern, wobei der Anzeigeeinheit (21) eine Eingabeeinheit (22) derart zugeordnet ist, dass das Ziel (100) anhand der Anzeige der Anzeigeeinheit (21) durch den Fahrer und/oder unterstützt durch den Fahrer festlegbar ist.

7. Rückfahrassistenzsystem (20) nach Anspruch 6, **dadurch gekennzeichnet, dass** das Rückfahrassistenzsystem (20) zum Ausführen eines Verfahrens nach einem der Ansprüche 1 bis 5 ausgestaltet ist.

## Claims

1. Method for assisting a driver of a vehicle (10) with at least one sensor arrangement (11) for monitoring the surroundings of the vehicle (10), and a superimposition steering system (12) for actuating a steering system (13) of the vehicle (10) during the execution of reverse travel of the vehicle (10), wherein the method provides the following method steps:
a) monitoring the surroundings to the rear of the vehicle (10),
b) defining a target (100) in the surroundings to the rear,
c) determining the position (101) of the target (100) relative to the vehicle (10),
d) calculating a setpoint steering lock (32) of the vehicle (10) for reaching the target (100) during the reverse travel,
e) determining the steering wheel angle (30) predefined by the driver,
**characterized by** the following step:
f) adapting a transmission ratio of the superimposition steering system (12) between the steering wheel angle (30) and the steering lock (31) of the vehicle (10) in order to approximate the steering lock (31) to the setpoint steering lock (32), wherein before the start of the reverse travel (10) of the vehicle the target (100) is marked with a marking device (102), wherein the driver selects the target (100) directly on a display unit (21) by means of an input unit (22) assigned to the display unit (21) or determines a zone in which the target (100) is defined.

2. Method according to Claim 1, **characterized in that** the steps c) to f) of the method are repeated continuously and/or quasi-continuously.

3. Method according to one of Claims 1 or 2, **characterized in that** the transmission ratio is adapted in such a way that the transmission ratio does not exceed a first limiting value and/or does not undershoot a second limiting value.

4. Method according to one of Claims 1 to 3, **characterized in that** the surroundings to the rear of the vehicle (10) are displayed at least schematically and in such a way that they can be seen by the driver with a representation of the steering lock (31) and/or of the setpoint steering lock (32) superimposed on them.

5. Method according to one of Claims 1 to 4, **characterized in that** the target (100) is defined automatically and/or by the driver of the vehicle (10).

6. Reversing assistance system (20) for a vehicle (10) for assisting a driver of the vehicle (10) when executing reverse travel of the vehicle (10) with at least one sensor arrangement (11) for monitoring the surroundings of the vehicle (10), and a superimposition steering system (12) for actuating a steering system (13) of the vehicle (10), wherein the surroundings to the rear of the vehicle (10) can be monitored by means of the at least one sensor arrangement (11), wherein a target (100) in the surroundings to the rear can be defined, and wherein the reversing assistance system (20) calculates a setpoint steering lock (32) of the vehicle (10) for reaching the target (100) during the reverse travel and determines the steering wheel angle (30) predefined by the driver, **characterized in that** the reversing assistance system is approximated to the setpoint steering lock (32) by adapting a transmission ratio of the superimposition steering system (12) between the steering wheel angle (30) and the steering lock (31) of the vehicle (10), and having a display unit (21) which is provided for at least schematically displaying the surroundings to the rear of the vehicle (10), wherein the representation of the steering lock (31) and/or of the setpoint steering lock (32) is superimposed on the display (21), and wherein the target is marked with a marking device (102) which facilitates determination of the relative position of the target with respect to the vehicle, wherein the display unit (21) is assigned an input unit (22) in such a way that the target (100) can be defined by the driver on the basis of the display of the display unit (21) and/or with assistance by the driver.

7. Reversing assistance system (20) according to Claim 6, **characterized in that** the reversing assistance system (20) is designed to carry out a method according to one of Claims 1 to 5.

## Revendications

1. Procédé d'assistance d'un conducteur d'un véhicule (10) avec au moins un arrangement de détection (11) destiné à surveiller un environnement du véhicule (10) et une direction à superposition (12) destinée à commander une direction (13) du véhicule (10) lors de l'exécution d'une marche arrière du véhicule (10), le procédé comprenant les étapes suivantes :
a) surveillance de l'environnement à l'arrière du véhicule (10),
b) définition d'une cible (100) dans l'environnement à l'arrière,
c) détermination de la position (101) de la cible (100) par rapport au véhicule (10),
d) calcul d'un braquage de direction de consigne (32) du véhicule (10) pour atteindre la cible (100) lors de la marche arrière,
e) détermination de l'angle du volant de direction (30) prédéfini par le conducteur,
**caractérisé par** les étapes suivantes :
f) adaptation d'un rapport de démultiplication de la direction à superposition (12) entre l'angle du volant de direction (30) et le braquage de direction (31) du véhicule (10) en vue d'aligner le braquage de direction (31) sur le braquage de direction de consigne (32), la cible (100) étant marquée avec un dispositif de marquage (102) avant de commencer la marche arrière du véhicule (10),
le conducteur sélectionnant la cible (100) directement sur une unité d'affichage (21) par le biais d'une unité de saisie (22) associée à l'unité d'affichage (21) ou déterminant une zone dans laquelle est définie la cible (100).

2. Procédé selon la revendication 1, **caractérisé en ce que** les étapes c) à f) du procédé sont répétées continuellement et/ou quasi-continuellement.

3. Procédé selon l'une des revendications 1 ou 2, **caractérisé en ce que** l'adaptation du rapport de démultiplication est réalisée de telle sorte que le rapport de démultiplication ne devient pas supérieur à une première valeur limite et/ou ne devient pas inférieur à une deuxième valeur limite.

4. Procédé selon l'une des revendications 1 à 3, **caractérisé en ce que** l'environnement à l'arrière du véhicule (10) est affiché de manière visible au conducteur au moins schématiquement et avec, en superposition, une représentation du braquage de direction (31) et/ou du braquage de direction de consigne (32).

5. Procédé selon l'une des revendications 1 à 4, **caractérisé en ce que** la cible (100) est définie automatiquement et/ou par le conducteur du véhicule (10).

6. Système d'assistance de marche arrière. (20) pour un véhicule (10) destiné à assister un conducteur du véhicule (10) lors de l'exécution d'une marche arrière du véhicule (10), comprenant au moins un arrangement de détection (11) destiné à surveiller un environnement du véhicule (10) et une direction à superposition (12) destinée à commander une direction (13) du véhicule (10), un environnement à l'arrière du véhicule (10) pouvant être surveillé par l'au moins un arrangement de détection (11), une cible (100) pouvant être définie dans l'environnement à l'arrière, et le système d'assistance de marche arrière (20) calculant un braquage de direction de consigne (32) du véhicule (10) pour atteindre la cible (100) lors de la marche arrière, déterminant un angle du volant de direction (30) prédéfini par le conducteur, **caractérisé en ce que** le système d'assistance de marche arrière, par une adaptation d'un rapport de démultiplication de la direction à superposition (12) entre l'angle du volant de direction (30) et le braquage de direction (31) du véhicule (10), aligne le braquage de direction (31) sur le braquage de direction de consigne (32), et comprenant une unité d'affichage (21), laquelle est conçue pour afficher au moins schématiquement l'environnement arrière du véhicule (10), une représentation du braquage de direction (31) et/ou du braquage de direction de consigne (32) étant superposée à l'affichage (21) et la cible étant marquée avec un dispositif de marquage (102) qui facilite une détermination de la position relative de la cible par rapport au véhicule, une unité de saisie (22) étant associée à l'unité d'affichage (21) de telle sorte que la cible (100) peut être définie au moyen de l'affichage de l'unité d'affichage (21) par le conducteur et/ou avec l'assistance du conducteur.

7. Système d'assistance de marche arrière (20) selon la revendication 6, **caractérisé en ce que** le système d'assistance de marche arrière (20) est configuré pour mettre en oeuvre un procédé selon l'une des revendications 1 à 5.
